(19) Europäisches Patentamt
European Patent Office
Office européen des brevets

(11) **EP 2 397 249 B1**

(12) **EUROPÄISCHE PATENTSCHRIFT**

(45) Veröffentlichungstag und Bekanntmachung des Hinweises auf die Patenterteilung:
**16.11.2016 Patentblatt 2016/46**

(51) Int Cl.:
*B23F 1/02* *(2006.01)*       *B23F 5/00* *(2006.01)*

(21) Anmeldenummer: **11003931.0**

(22) Anmeldetag: **12.05.2011**

(54) **Verfahren zum Bearbeiten einer Verzahnung und Werkzeugmaschine**

Method for processing a toothed workpiece and machine tool

Procédé de traitement d'une denture et machine-outil

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.06.2010 DE 102010023830**

(43) Veröffentlichungstag der Anmeldung:
**21.12.2011 Patentblatt 2011/51**

(73) Patentinhaber: **Gleason-Pfauter Maschinenfabrik GmbH**
**71636 Ludwigsburg (DE)**

(72) Erfinder:
• **Heidelmann, Wilfried**
**71634 Ludwigsburg (DE)**

• **Vucetic, Dragan**
**50126 Bergheim (DE)**

(74) Vertreter: **Leinweber & Zimmermann**
**European Patent Attorneys**
**Patentanwälte**
**Rosental 7**
**80331 München (DE)**

(56) Entgegenhaltungen:
**DE-A1- 3 816 270     DE-A1- 4 112 122**

• **"15.2 Besonderheiten des Verfahrens ED - Bausch T", 1. Januar 2006 (2006-01-01), INNOVATIVE ZAHNRADFERTIGUNG, EXPERT VERLAG, PAGE(S) 534 - 537, XP009152974, ISBN: 978-3-8169-1871-4 * das ganze Dokument ***

## Beschreibung

Die Erfindung betrifft ein Verfahren zum Bearbeiten einer Verzahnung, deren Zahnflanken durch ein Aufmaß von ihrer Sollgeometrie abweichen, bei dem das Aufmaß durch eine Zustellung in mindestens zwei Zustellschritten und jeweils daran anschließenden Arbeitshüben mit einem um eine Werkzeugachse rotierenden Profilwerkzeug abgetragen wird, wozu das Profilwerkzeug in einer von dem Schwenkwinkel zwischen der zur Werkzeugachse orthogonalen Rotationsebene des Werkzeugs und der Verzahnungsachse abhängigen Einstellung relativ zu der Verzahnung mit dieser in einen Bearbeitungseingriff gebracht wird, in welchem ein Materialabtrag in dem sich nach dem jeweiligen Zustellschritt ergebenden Eingriffsbereich erfolgt, wobei sich der Eingriffsbereich nach dem letzten Zustellschritt bei auf einen durch seine Auslegung bestimmten Schwenkwinkel eingestellten Profilwerkzeug über die gesamte Flankenhöhe erstreckt und dadurch der zur Sollgeometrie führende Materialabtrag bewirkt wird, sowie eine zur Ausführung des Verfahrens geeignete Werkzeugmaschine und eine mit dem Verfahren hergestellte Verzahnung.

Derartige Verfahren sind bekannt, etwa aus Thomas Bausch et al "Innovative Zahnradfertigung" Expert Verlag, 3. Auflage. Als Beispiel für ein solches diskontinuierliches Profilverfahren wird darin auf den Seiten 534 bis 537 das Profilschleifen erläutert.

So ist in Bild 15.2-1 auf Seite 534 eine Profilschleifscheibe im Einsatz zum Schleifen der Zahnflanken einer Schrägverzahnung gezeigt. Man erkennt, daß die Rotationsebene des Werkzeugs gegenüber der Verzahnungsachse eingeschwenkt ist. Üblicherweise entspricht der dabei eingestellte Schwenkwinkel dem Schrägungswinkel der Verzahnung, und das Profil des Werkzeugs ist entsprechend auf die Bearbeitung in diesem Schwenkwinkel ausgelegt. Es ist jedoch auch bekannt, z. B. für eine größere Spurüberdeckung die Bearbeitung unter einem vom Schrägungswinkel abweichenden Schwenkwinkel durchzuführen, wobei das Werkzeugprofil auf diesen Bearbeitungsschwenkwinkel ausgelegt ist.

Insbesondere in der Abbildung 15.2-5 auf Seite 536 wird anhand des Beispiels der radialen Zustellung in drei äquidistanten Zustellschritten erläutert, daß sich der Eingriffsbereich des entsprechend profilierten Werkzeugs nach der ersten Zustellung in der Zahnhöhenrichtung lediglich im Bereich der Fußflanke erstreckt, während er sich im Bereich der Kopfflanke erst im Verlauf der weiteren Zustellschritte ergibt. In axialer Richtung erstreckt sich der Eingriffsbereich über die gesamte Breite der Verzahnung.

Um einen über die Flankenhöhe gleichmäßigeren Materialabtrag zu erreichen, wird gemäß der Erläuterung auf Seite 536 die Schleifscheibe nach jeder Einzelzustellung umprofiliert. Alternativ wird auch nacheinander mit mehreren Schleifscheiben gearbeitet, wobei jede Schleifscheibe das Profil erhält, das benötigt wird, die in dem jeweiligen Zustellschritt zu erreichende Geometrie der Zahnflanken zu erzeugen.

Diese Vorgehensweisen erfordern jedoch komplexere Verfahrensschritte und auch einen entsprechend erhöhten Zeitaufwand für das Bearbeitungsverfahren bis zur Herstellung der Zahnflanken-Sollgeometrie.

Bei der Sollgeometrie nach Anspruchswortlaut handelt es sich um die mit dem Bearbeitungsverfahren zu erzeugende Zielgeometrie. Sie kann der Endgeometrie der fertiggestellten Verzahnung entsprechen, oder aber auch eine Zwischengeometrie darstellen, z. B. eine durch Schruppen zu erzeugende Geometrie, während die Endgeometrie durch einen oder mehrere nachfolgende Schlichtschritte erzeugt wird. Entsprechend bezieht sich die gesamte Flankenhöhe, über die sich der Eingriffsbereich nach dem letzten Zustellschritt erstreckt, auf die Flankenhöhe der Sollgeometrie, die nicht unbedingt mit der gesamten Flankenhöhe der Endgeometrie der Verzahnung übereinstimmen muß, aber kann.

Im Hinblick auf die oben erläuterten Probleme im Stand der Technik liegt der Erfindung die Aufgabe zugrunde, bei dem genannten Verfahren unter geringem Arbeits-/ Zeitaufwand einen über die Flankenhöhe gleichmäßigeren Materialabtrag zu erhalten.

Diese Aufgabe wird von der Erfindung durch eine Weiterbildung eines Verfahrens der eingangs genannten Art gelöst, das im wesentlichen dadurch gekennzeichnet ist, daß in mindestens einem dem letzten Zustellschritt vorangehenden Zustellschritt das Profilwerkzeug auf einen von seinem Auslegungswinkel abweichenden Schwenkwinkel eingestellt wird, der einen gegenüber der Einstellung des Auslegungswinkels in Richtung der Flankenhöhe vergrößerten Eingriffsbereich ergibt.

Dabei beruht die Erfindung auf der Erkenntnis, daß die relative Orientierung zwischen Werkzeug und Verzahnung, die üblicherweise durch den Schwenkwinkel angegeben wird, um den die Werkzeugachse gegenüber der Normalenebene der Verzahnungsachse eingeschwenkt ist, als ein der Zustellung zugeordneter Freiheitsgrad genutzt werden kann, um einen verbesserten Eingriffsbereich nach mindestens einem dem letzten Zustellschnitt vorangehenden Zustellschritt zu erreichen, ohne dazu das Profil des Werkzeugs umprofilieren oder ein unterschiedliches Werkzeug verwenden zu müssen. Der gleichmäßigere Materialabtrag mindert die Gefahr von Schleifbrand ohne Verlust an Fertigungsgeschwindigkeit.

Zwar schließt das erfindungsgemäße Verfahren nicht aus, daß ein Werkzeug während der Bearbeitung auch umprofiliert werden darf. Zwischen dem mindestens einen dem letzten Zustellschritt vorangehenden Zustellschritt und dem letzten Schritt findet jedoch kein Umprofilieren statt, d. h. das Profilwerkzeug weist in der Bearbeitung nach dem wenigstens einen vorangehenden Zustellschritt sein auf den Schwenkwinkel im letzten Zustellschritt ausgelegtes Profil auf.

Bevorzugt umfaßt der mindestens eine vorangehende Zustellschritt den ersten Zustellschritt des Bearbeitungsverfahrens. Da bei dem ersten Arbeitshub im herkömmlichen Verfahren der Eingriffsbereich gegenüber den folgenden Arbeitshüben gering ist, ergibt sich so bei dieser Verfahrensvariante die größtmögliche Wirkung gleich zu Beginn des Verfahrens.

Zweckmäßig werden abweichende Schwenkwinkel in mehreren Zustellschritten eingestellt, und nähern sich dem Auslegungswinkel monoton, insbesondere streng monoton an. So ist der erfindungsgemäß zu erzielende Vorteil nicht nur zu Beginn des Bearbeitungsverfahrens, sondern für das gesamte oder auch einen Teil davon erreichbar.

Besonders kommt das erfindungsgemäße Verfahren zur Geltung, wenn es sich bei der Verzahnung um eine echte Schrägverzahnung mit Schrägungswinkel ungleich 0 handelt. Ein positiver Effekt kann jedoch, wenigstens zum Teil, auch bei einer Geradverzahnung erreicht werden.

Bevorzugt wird der abweichende Schwenkwinkel in Abhängigkeit von der Größe des Auslegungswinkels und/oder Schrägungswinkels gewählt. Weitere zu berücksichtigende Parameter können Zähnezahl, Modul und Eingriffswinkel der Verzahnung sowie der Durchmesser des Profilwerkzeugs sein. Die maximale Abweichung des Auslegungswinkels vom Schrägungswinkel ist abhängig vom Werkzeugdurchmesser begrenzt, da das Werkzeug am radial äußeren Ende nicht zu dünn/spitz werden darf.

In einer bevorzugten Ausgestaltung des Verfahrens wird der Auslegungswinkel vom Betrag her größer als der Betrag des Schrägungswinkels gewählt. Im Vergleich zu einem auf den Schrägungswinkel ausgelegten Werkzeug, z. B. einer Profilschleifscheibe, ist es an seinem äußeren, den zahnfußnahen Bereich der Zahnflanken bearbeitenden Bereich schmaler und an dem den zahnkopfnahen Bereich der Zahnflanken bearbeitenden Bereich breiter.

Für diesen Fall ist vorgesehen, daß der Betrag des abweichenden Schwenkwinkels kleiner als der Betrag des Auslegungswinkels gewählt wird. Dadurch ergibt sich verglichen mit dem konventionellen Verfahren noch ein kleinerer Ankratz-Achsabstand, und es ist eine geringere Zustellung mit entsprechend geringeren Bearbeitungszeiten möglich.

In einer anderen Verfahrensgestaltung ist der Auslegungswinkel vom Betrag her kleiner als der Betrag des Schrägungswinkels gewählt. Dann sollte der Betrag des abweichenden Schwenkwinkels größer als der Betrag des Auslegungswinkels sein.

Die Erfindung kann bei tangentialer Zustellung genutzt werden. Bevorzugt erfolgt die Zustellung jedoch radial, was auch die Anwendung eines Zweiflankenverfahren vereinfacht.

Grundsätzlich ist es möglich, den abweichenden Winkel empirisch zu bestimmen. Bevorzugt wird der abweichende Schwenkwinkel jedoch rechnerisch bestimmt.

Dabei wird besonders bevorzugt das im jeweiligen Zustellschritt verwendete Zustellmaß auf den in diesem Schritt eingestellten Schwenkwinkel abgestimmt. Durch diese Abstimmung kann das Ausmaß, in dem der Eingriffsbereich vergrößert wird, beeinflußt und optimiert werden.

Weiter ist es zweckmäßig, daß die Abstimmung unter Berücksichtigung einer nach Festlegung des Auslegungswinkels bestimmbaren Abhängigkeit einer, insbesondere zweier Größe(n) der Zahnflankengeometrie von einer, insbesondere zwei steuerbaren Bewegungsachsen des Werkzeugs und/oder Werkstücks zugeordneten Größe(n) erfolgt. Hinsichtlich der Flankengeometriegrößen werden bevorzugt das Aufmaß und/oder die Profilwinkelabweichung herangezogen, während als Bewegungsachsengrößen eine schwenkwinkelbezogene Größe und/oder eine zustellparameterbezogene Größe herangezogen wird, nämlich z. B. die Differenz aus abweichendem Schwenkwinkel und Auslegungswinkel und/oder eine Abweichung des Zustellparameters von der maximal möglichen Zustellung. Die Profilwinkelabweichung $f_{Ha}$ ist in der DIN 3960 definiert. Das Aufmaß wird z. B. in der Mitte der Verzahnungsbreite am Teilkreis gemessen.

Besonders bevorzugt wird bei der Abstimmung auf das Erreichen einer unterhalb einer vorgegebenen ersten Schwelle liegenden, insbesondere verschwindenden Profilwinkelabweichung abgestellt. Je geringer die Profilwinkelabweichung, desto gleichmäßiger der Abtrag. Entsprechend wird bei Verschwinden der Profilwinkelabweichung eine Maximierung des Eingriffsbereichs erreicht.

In einer besonders bevorzugten Verfahrensgestaltung beinhaltet die rechnerische Bestimmung bzw. die Abstimmung iterative Rechenschritte. Dadurch können auch nicht lineare Abhängigkeiten der obigen Art geeignet verwendet werden. Als Eingabegröße für den k-ten Zustellschritt wird dabei z. B. das nach dem k-ten Arbeitshub angestrebte Aufmaß vorgegeben. Folgende Teilschritte werden bei einem Iterationsschritt bevorzugt eingesetzt:

- Bestimmen des Zustellmaßes, das dem aus dem vorangegangenen Iterationsschritt erhaltenen Aufmaß zugeordnet ist, aus der Abhängigkeit des Aufmaßes von dem Zustellparameter, wobei für den ersten Iterationsschritt auf das nach dem jeweiligen Arbeitshub zu erreichende Aufmaß zurückgegriffen wird;

- Bestimmen der diesem vorstehend bestimmten Zustellmaß zugeordneten Profilwinkelabweichung aus der Abhängigkeit der Profilwinkelabweichung von dem Zustellparameter;

- Bestimmen derjenigen Abweichung vom Auslegungswinkel, bei der sich aus der Abhängigkeit der Profilwinkelabweichung von dem Schwenkwinkel eine der vorstehend bestimmten Profilwinkelabweichung betragsmäßig gleiche, aber vom Vorzeichen her unterschiedliche Profilwinkelabweichung ergibt;

- Bestimmen einer Aufmaßkorrektur, die der vorstehend bestimmten Abweichung vom Auslegungswinkel zugeordnet ist, aus der Abhängigkeit des Aufmaßes von dem Schwenkwinkel; und Erhalten eines Aufmaßes durch Subtraktion der vorstehend bestimmten Aufmaßkorrekturen von dem nach dem jeweiligen Arbeitshub zu erreichenden Aufmaß, wobei das so erhaltene Aufmaß dem nächsten Iterationsschritt zugrundegelegt wird.

Als Abbruchkriterium für die Iteration kann eine zweite Schwelle vorgesehen werden, wobei die Iteration abgebrochen wird, wenn das am Anfang eines Iterationsschritts eingegebene Aufmaß zuzüglich der in diesem Schritt erhaltenen Aufmaßkorrektur von dem der Iteration als Eingabegröße vorgegebenen Aufmaß um weniger als die zweite Schwelle unterscheidet. Es kann dabei eine Rechengenauigkeit von z. B. $10^{-6}$ vorgegeben werden.

In einigen Fällen ist es denkbar, daß die Abstimmung eine Linearisierung der Abhängigkeiten zwischen den Flankengeometriegrößen und den den Bewegungsachsen zugeordneten 'Größen umfaßt. Dadurch kann die Bestimmung der Zustellgrößen rechnerisch vereinfacht werden, indem sie sich durch Lösung des aus der Linearisierung gewonnen Gleichungssystems ergibt.

Bei dem Verfahren kann es sich um ein Einflankenverfahren handeln, insbesondere bei radialer Zustellung wird ein Zweiflankenverfahren bevorzugt.

Des weiteren ist neben der Bearbeitung einer Außenverzahnung auch daran gedacht, Innenverzahnungen zu bearbeiten.

Auch ist zur weiteren Zeitersparnis an eine gleichzeitige Mehrflankenbearbeitung gedacht, indem entweder mehrere Werkzeuge oder ein entsprechend ausgelegtes Multiwerkzeug verwendet werden/wird.

Des weiteren besteht die Möglichkeit, dem bei der Zustellung eingestellten Schwenkwinkel des Werkzeugs während seines Arbeitungshubes in Richtung der Verzahnungsachse eine Modifizierung des Schwenkwinkels zwischen der Werkzeugachse und der Normalebene der Verzahnungsachse zu überlagern. Diese Modifizierung kann beispielsweise ausgenutzt werden, wenn sich eine Größe der Verzahnung über die Verzahnungsachse hinweg ändern soll, beispielsweise eine Breitenballigkeit erzeugt werden soll.

Das diskontinuierliche Profilverfahren der Erfindung umfaßt insbesondere Profilschleifen, und kann auch das Profilwälzen umfassen.

In vorrichtungstechnischer Hinsicht stellt die Erfindung eine Werkzeugmaschine zum Bearbeiten einer Verzahnung bereit, mit einer die Richtung der Verzahnungsachse vorgebenden und zur Aufnahme der Verzahnung ausgelegten Werkstückspindel, einer die Werkzeugachse vorgebenden, zur Aufnahme eines Werkzeugs ausgelegten drehbaren Werkzeugspindel, die gegenüber der Normalebene der Verzahnungsachse um einen Schwenkwinkel verschwenkbar ist, und einer die Achsbewegungen der Vorrichtung steuernden Steuereinrichtung, die weiter im wesentlichen dadurch gekennzeichnet ist, daß die Steuereinrichtung zur Ausführung eines Verfahrens nach einem der oben erläuterten Verfahrensgestaltungen betreibbar ist, d.h. entsprechend programmiert ist.

In diesem Zusammenhang stellt die Erfindung auch ein Computerprogrammprodukt für die Steuerung einer Werkzeugmaschine unter Schutz, die, wenn auf einer Steuereinrichtung der Werkzeugmaschine ausgeführt, die Werkzeugmaschine zur Durchführung eines Verfahrens nach den oben erläuterten Verfahrensgestaltungen steuert.

Schließlich wird durch die Erfindung noch eine Verzahnung unter Schutz gestellt, deren Zahnflanken-Sollgeometrie durch eine der oben beschriebenen Verfahrensgestaltungen erzeugt wurde.

Weitere Merkmale, Einzelheiten und Vorteile der Erfindung ergeben sich aus der folgenden Beschreibung der beigelegten Figuren, von denen

Fig. 1 eine Werkzeugmaschine mit ihren Maschinenachsen zeigt,

Fig. 2 schematisch Winkeleinstellungen zwischen Werkzeug und Verzahnung zeigt,

die Figuren 3a bis 3d vier für das erfindungsgemäße Verfahren in einer ersten Ausgestaltung (Außenverzahnung, radiale Zustellung) verwendete Abhängigkeiten graphisch darstellen,

die Figuren 4a bis 4d entsprechende Darstellungen in einer zweiten Ausgestaltung (Außenverzahnung, radiale Zustellung) sind

die Figuren 5a bis 5d entsprechende Darstellungen in einer dritten Ausgestaltung (Innenverzahnung, radiale Zustellung) sind, und

die Figuren 6a bis 6d entsprechende Darstellungen in einer dritten Ausgestaltung (Innen-verzahnung, tangentiale Zustellung) sind.

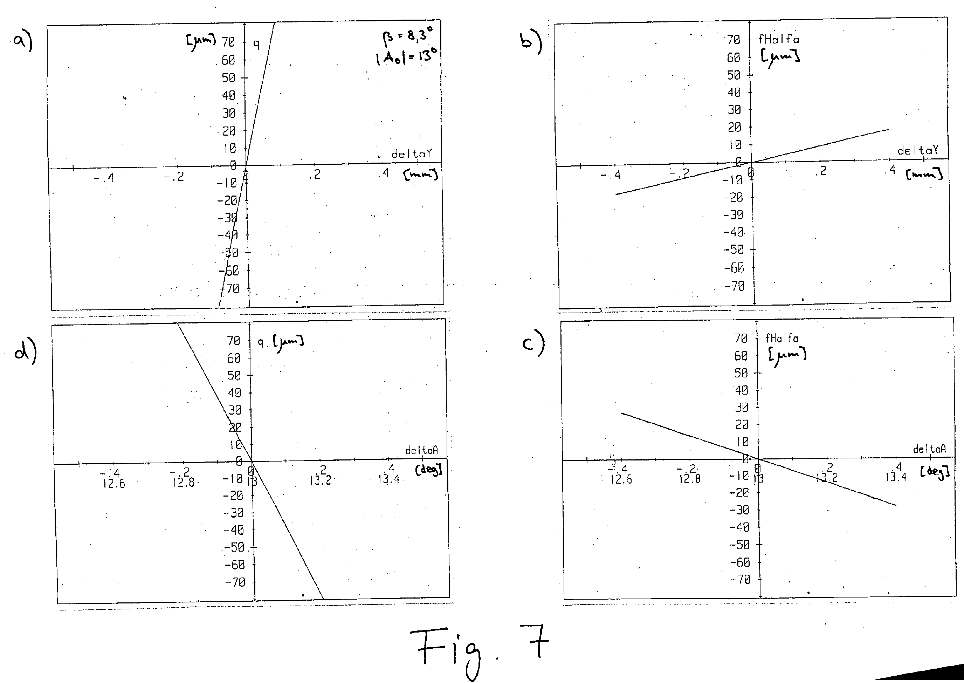

die Figuren 7a bis 7d entsprechende Darstellungen in einer vierten Ausgestaltung (Innenverzahnung, tangentiale Zustellung) sind.

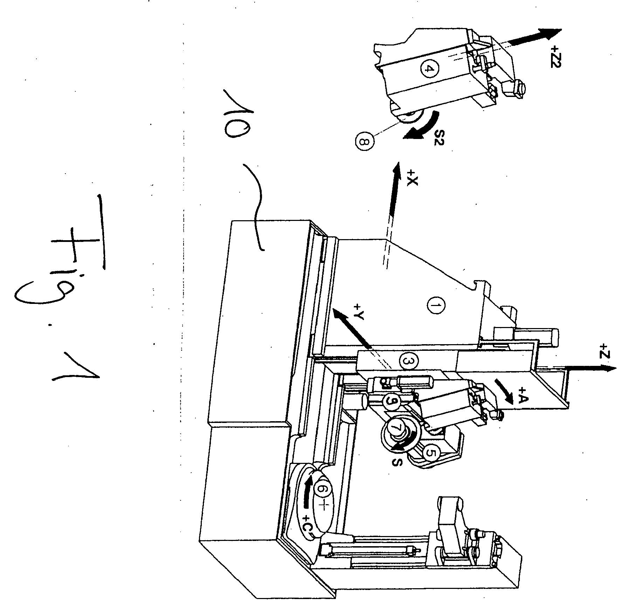

Anhand der in Fig. 1 dargestellten Werkzeugmaschine werden zunächst die auftretenden Maschinenachsen beschrieben. In dem Maschinenbett 10 ist in Fig. 1 rechts der Werkstücktisch 6 in einer horizontalen Ebene angeordnet und in üblicher Weise zur Aufspannung eines in Fig. 1 nicht dargestellten Werkstückes 2, beispielsweise eines außenverzahnten Zahnrads, ausgelegt. Dementsprechend verläuft die Verzahnungsachse Z, die mit der Verschiebungsrichtung des später beschriebenen Axialschlittens 3 übereinstimmt, vertikal. Die Drehrichtung der Verzahnung 2 um die Verzahnungsachse Z wird als C bezeichnet.

In für sich bekannter Weise ist ein in Fig. 1 links im Maschinenbett angeordneter Radialschlitten 1 linear gegenüber dem Werkstücktisch 6 bewegbar. Die bezüglich einer aufgespannten Verzahnung 2 radial erfolgende Bewegung definiert die radiale Richtung X. Die radiale Position des Radialschlittens 1 stellt einen Zustellparameter einer Ausführungsform der Erfindung dar.

Auf dem Radialschlitten 1 kann ein daran gleitbar angeordneter Axialschlitten 3 in einer zur Radialrichtung X orthogonalen axialen Richtung Z verfahren werden. Die Axialrichtung Z stimmt mit der Verzahnungsachse überein.

Schwenkbar auf dem Axialschlitten 3 angeordnet ist eine weitere Schlittenanordnung mit einem Schlittenbett für einen darin gleitbaren Tangentialschlitten 9, der somit eine weitere (dritte) Linearbewegung ausführen kann. In der in Fig. 1 dargestellten Stellung ist der Tangentialschlitten 9 gegenüber dem Axialschlitten 3 nicht verschwenkt, so daß die Bewegungsachse Y des Tangentialschlittens senkrecht auf der X-Z Ebene steht. Beim Verschwenken des Tangentialschlittens 9 mit Schwenkrichtung A wird die Tangentialrichtung Y aus der Normalenebene zur axialen Achse Z um den Schwenkwinkel A geschwenkt. Dieses Verschwenken findet somit in einer zur radialen Richtung X senkrecht verlaufenden Ebene statt.

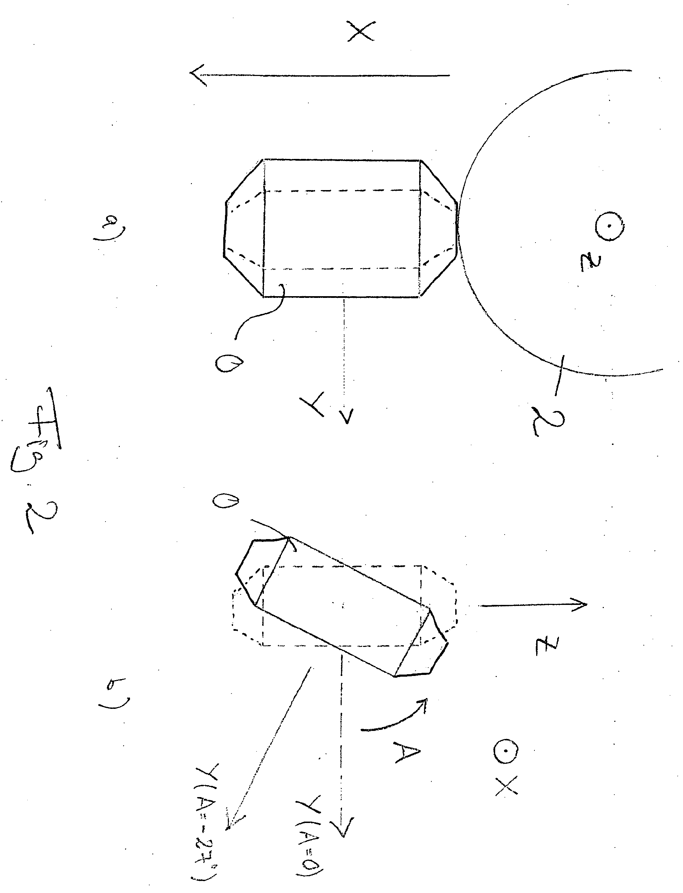

Auf dem Tangentialschlitten 9 ist der Werkzeugkopf 5 mit der in Y-Richtung (Werkzeugachse) verlaufenden Werkzeugspindel 7 angeordnet, die zur Aufnahme eines der Bearbeitung der aufgespannten Verzahnung 2 dienenden Werkzeugs ausgelegt ist, bei dem es sich in den dargestellten Ausführungsbeispielen um eine Profilschleifscheibe 0 (Fig. 2) handelt. Die Profilschleifscheibe 0 erstreckt sich somit senkrecht zur Werkzeugachse Y, so daß der Schwenkwinkel zwischen ihrer Rotationsebene und der Verzahnungsachse Z dem Schwenkwinkel A entspricht, um den die Werkzeugachse Y aus der Normalenebene zur Axialrichtung (Verzahnungsrichtung) Z geschwenkt ist. Die Werkzeugposition in Tangentialrichtung stellt ebenfalls einen möglichen Zustellparameter dar. Die Drehrichtung um die Werkzeugachse wird mit S bezeichnet.

Sofern, wie beim herkömmlichen diskontinuierlichen Profilschleifen einer z. B. rechtsschrägen Außenverzahnung der Schwenkwinkel auf den Schrägungswinkel der Verzahnung eingestellt wird, ist der Tangentialschlitten 9 bei der rechtsschrägen Verzahnung (z. B. Schrägungswinkel ß = 25°) entgegen der in Fig. 1 dargestellten Pfeilrichtung A zu schwenken, während der Schwenkwinkel im Falle einer linksschrägen Außenverzahnung ein positives Vorzeichen trägt.

Ein ebenfalls vorgesehener weiterer Schlitten 4 mit Linearachse Z2 für eine Abrichteinrichtung und mit Drehachse S2 für die Spindel der Abrichtscheibe 8 ist für die Erfindung nicht notwendig und wird daher nicht weiter beschrieben. Gleiches gilt für die die Bewegung in den jeweiligen Linearachsen X, Y, Z ($Z_2$) und Rotationsachsen A, C, S bewirkenden, dem Fachmann bekannten Antriebe.

In Fig. 2, a, b sind die relevanten Achsen X, Y, Z, A nochmals ohne Maschinenteile in zwei Aufsichten schematisch dargestellt. Die mit gestrichelter Linie skizzierte Profil-schleifscheibe ist nicht verschwenkt, während die mit durchgezogener Linie skizzierte Profilschleifscheibe 0 zur Bearbeitung einer rechtsschrägen Außenverzahnung auf A = -27° eingeschwenkt ist.

Nach Erläuterung der Maschinenachsen wird nun ein erstes Ausführungsbeispiel der Erfindung genauer beschrieben. Es soll eine rechtsschräge Außenverzahnung (ß = 25°) durch diskontinuierliches Profilschleifen bei radialer (X) Zustellung im Zweiflankenverfahren bearbeitet werden. Die dazu bereitgestellte Profilschleifscheibe ist so ausgelegt, daß sie im letzten Schleifhub zur Herstellung der gewünschten Flankenendgeometrie der Verzahnung 2 bei einem Schwenkwinkel von -27° arbeiten muß, d. h. sie ist betragsmäßig auf einen größeren Auslegungswinkel oder Nennwinkel als den Schrägungswinkel ausgelegt, $|A_0| = 27° > 25° = ß$. Beim herkömmlichen diskontinuierlichen Profilschleifen würde man die so ausgelegte Profilschleifscheibe auf einen Schwenkwinkel von -27° einschwenken und in mehreren äquidistanten Zustellschritten das vorhandene Aufmaß q von den Flanken der zu bearbeitenden Verzahnung 2 abtragen, wie bereits im einleitenden Teil der Beschreibung erläutert.

Im Gegensatz dazu wird gemäß einer bevorzugten Ausführungsform der Erfindung die Schleifscheibe 0 für den ersten Zustellschritt auf einen von dem Auslegungswinkel $A_0$ abweichenden Schwenkwinkel A eingestellt, wodurch sich ein relativ gesehen vergrößerter Eingriffsbereich zwischen der Profilscheibe 0 und der Verzahnung 2 ergibt, und somit ein gleichmäßiger Abtrag über die Schleifhübe hinweg. Zur Bestimmung des einzustellenden Schwenkwinkels A werden berechenbare Abhängigkeiten zwischen Größen der Zahnflankengeometrie und steuerbaren Bewegungsachsen des Werkzeugs und/oder des Werkstücks zuordenbaren Größen ausgenutzt. Bei Zustellung in radialer Richtung X werden bei dieser Ausführungsform das Aufmaß q und die Profilwinkelabweichung $f_{H\alpha}$ als betrachtete Größen der Flankengeometrie herangezogen, und als den Bewegungsachsen zugeordnete Größen der eingestellte Schwenkwinkel, ausgedrückt durch die Differenz $\delta A$ aus abweichendem Schwenkwinkel $A_1$ (für den ersten Zustellschritt) und Auslegungswinkel $A_0$ und der Zustellparameter X, ausgedrückt durch dessen Abweichung $\delta X$ von der maximal möglichen Zustellung, bei der die Flankenendgeometrie erreicht wird.

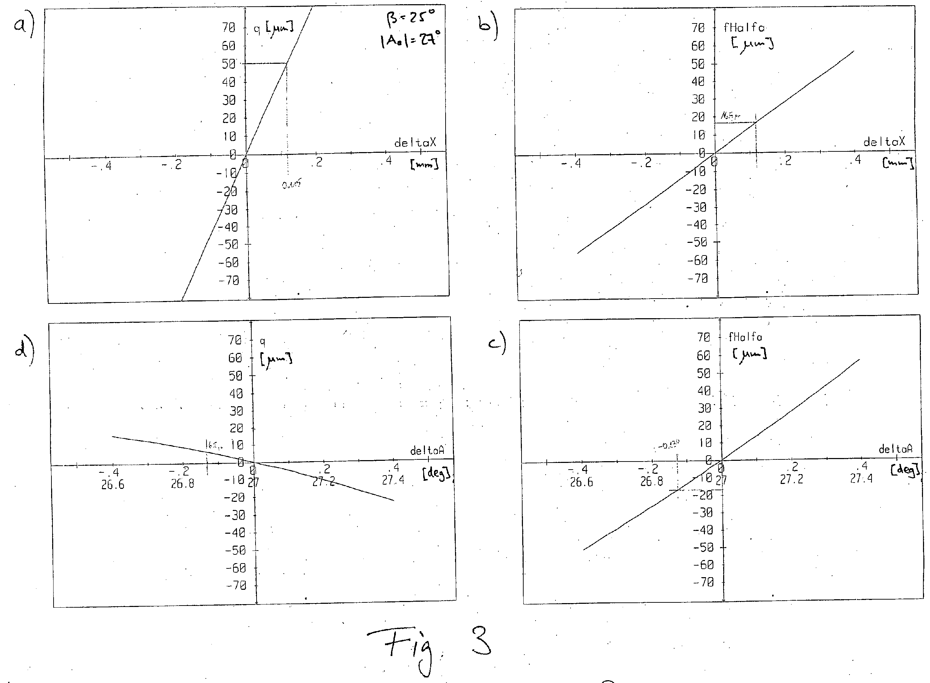

Diese Abhängigkeiten sind für einen festgelegten Satz weiterer Parameter wie etwa Zähnezahl, Modul und Eingriffswinkel der Verzahnung sowie dem Schleifscheibendurchmesser berechenbar und in den Figuren 3a bis 3d für das Aufmaß q und die Profilwinkelabweichung $f_{H\alpha}$ dargestellt, wobei Fig. 3a die Abhängigkeit q ($\delta$X), Fig. 3b die Abhängigkeit $f_{H\alpha}$ ($\delta$X), Fig. 3c die Abhängigkeit $f_{H\alpha}$ ($\delta$A), und Fig. 3d die Abhängigkeit q ($\delta$A) wiedergibt. Die ersten beiden Figuren Fig. 3a und Fig. 3b gelten für den Fall, daß Schwenkwinkel $A_k$ und Auslegungswinkel $A_0$ übereinstimmen. Die letzten beiden Figuren Fig. 3c und Fig. 3d geben an, welche Profilwinkelabweichung $f_{H\alpha}$ und welches Aufmaß q man nach dem letzten Arbeitshub erhalten würde, hätte man durchwegs einen um $\delta$A vom Auslegungswinkel $A_0$ abweichenden Einstellwinkel A eingestellt.

Aus diesen Abhängigkeiten wird nun iterativ für den ersten Zustellschritt der Schwenkwinkel $A_1$ und das Zustellmaß $\delta X_1$ so bestimmt, daß ausgehend vom nach dem ersten Schleifhub zu erreichenden Aufmaß q, das eine Eingangsgröße für die Iteration ist, eine Profilwinkelabweichung $f_{H\alpha}$ gleich Null erreicht wird. Der erste Schritt der Iteration, wenn von Hand ausgeführt, funktioniert wie folgt: Ist das zu erreichende Aufmaß q = 50 $\mu$m, ergibt sich aus Fig. 3a eine Differenz zwischen Ankratz-Achsabstand und End-Achsabstand von ca. 0,12 mm. Bei diesem Wert wäre gemäß Fig. 3b eine Profilwinkelabweichung $f_{H\alpha}$ von ca. 17 $\mu$m zu erwarten. Diese Profilwinkelabweichung soll durch eine Schwenkwinkeländerung kompensiert werden. Dazu ist für eine Kompensations-Profilwinkelabweichung von -17 $\mu$m eine betragsmäßige Verkleinerung des Schwenkwinkels gegenüber dem Auslegungswinkel um etwa 0,13° erforderlich, die aus Fig. 3c ablesbar ist. Bei einer entsprechenden Korrektur des Schwenkwinkels ergibt sich allerdings aus Fig. 3d ein um etwa 7 $\mu$m größeres Aufmaß. Das bedeutet, daß die Schleifscheibe bei einem Aufmaß von q = 50 + 7 = 57 $\mu$m Kontakt hätte. Da der Kontakt allerdings auf das Aufmaß von q = 50 $\mu$m ausgelegt sein soll ist für den nächsten Iterationsschritt der Achsabstand entsprechend zu reduzieren, die Iteration wird somit mit einem geringeren Achsabstand fortgesetzt, solange, bis ein ausreichendes Konvergenzkriterium der Iteration erfüllt ist, beispielsweise wenn die aufgrund der Schwenkwinkeländerung zu berücksichtigende Korrektur des Aufmaßes zusammen mit dem dem reduzierten Achsabstand zugeordneten Aufmaß von dem zu erreichenden Aufmaß um weniger als eine vorgegebene Schwelle von beispielsweise $10^{-2}$ $\mu$m abweicht.

Nach jeder Zustellung und anschließendem Arbeitshub kann eine erneute Berechnung des Schwenkwinkels vorgenommen werden, wobei von einem neuen, verringerten Aufmaß auszugehen ist. Dabei wird sich der einzustellende Schwenkwinkel $A_K$ dem Auslegungswinkel $A_0$ immer weiter annähern, bis für den letzten Zustellschritt n der Schwenkwinkel $A_n$ auf den Auslegungswinkel $A_0$ eingestellt wird. Das nach einem Zustellschritt nachfolgendem Arbeitshub zu erreichende Aufmaß $q_k$ wird wie somit vorgegeben; dies kann auch automatisch erfolgen, indem z. B. ein ursprüngliches Aufmaß von $q_o$

= 100 $\mu$m in 4 Schruppgängen und einem Schlichtgang um je 20 $\mu$m bis auf die Endgeometrie abgetragen wird.

Sofern die Iteration nicht konvergiert, ist bei radialer Zustellung der Unterschied zwischen dem Betrag des Auslegungswinkels und dem Betrag des Schrägungswinkels nicht ausreichend groß, und es sollte eine Schleifscheibe mit einem entsprechend betragsmäßig größeren Auslegungswinkel herangezogen werden. Eine mögliche Anfangswahl für den Auslegungswinkel $A_0$ ist derjenige Winkel, der betragsmäßig in der Mitte zwischen Schrägungswinkel ß und demjenigen maximalen Auslegungswinkel liegt, bei dem unter Berücksichtigung der erforderlichen radial äußeren Werkzeugdicke die gewünschte Flankenendgeometrie überhaupt noch erzeugbar ist. Alternativ könnte gleich auf diesen maximalen Auslegungswinkel abgestellt werden, der mit größerem Werkzeugdurchmesser abnimmt.

Wenn, wie in den Figuren Fig. 3a bis Fig. 3d annähernd gegeben, die Abhängigkeiten im relevanten Bereich nur unwesentlich von einer linearen Abhängigkeit abweichen, lassen sich alternativ zu der iterativen Lösung die gesuchten Größen durch die Auflösung eines linearen Gleichungssystems

$$\Omega x = b$$

berechnen, mit dem Unbekanntenvektor x = ($\delta$X, $\delta$A), dem vorgegebenen Zielwertvektor b = ($q_{nenn}$, 0) und den Steigungen aus den Figuren (in dieser Reihenfolge) 3a, 3d, 3b, 3c für die Matrixwerte $\Omega_{11}$, $\Omega_{12}$, $\Omega_{21}$, $\Omega_{22}$.

Sofern eine solche Linearisierung der Abhängigkeiten allerdings zu ungenau ist, wird bevorzugt das rechnergestützte iterative Lösungsverfahren beibehalten, das oben erläutert wurde. Selbst wenn man als Sollwert im Iterationsverfahren $f_{H\alpha}$ nicht auf Null setzt, sondern auf einen (niedrigeren) Schwellenwert, der jedenfalls geringer als die herkömmlich nach dem ersten Schleifhub zu erwartende Profilwinkelabweichung ist, bleibt ein Vorteil eines gleichmäßigeren Abtrags erhalten, und der Konvergenzbereich der Iteration wird größer.

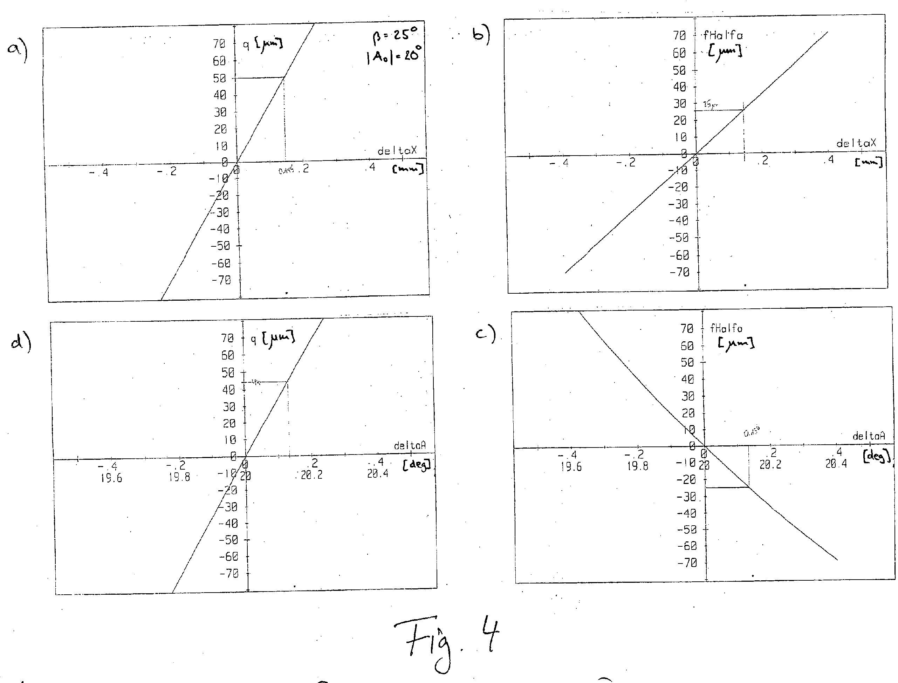

Die Figuren 4a bis 4d entsprechen den Abhängigkeiten der Figuren 3a bis 3d für den Fall einer Schleifscheibenauslegung, die einem Schwenkwinkel im letzten Schleifhub von -20° entspricht, also einem betragsmäßig kleineren Auslegungswinkel als dem Schrägungswinkel ß, der wiederum als 25° gewählt ist (rechtsschräge Außenverzahnung). Während die Steigungen der Abhängigkeiten $f_{H\alpha}$ ($\delta$X) und q ($\delta$X) hinsichtlich des Vorzeichens unverändert bleiben, ändert sich für die Abhängigkeiten $f_{H\alpha}$ ($\delta$A) und q ($\delta$A) das Vorzeichen der Steigung. Das rechnerische Prinzip zur Bestimmung des Schwenkwinkels $A_K$ für jede Zustellung mit anschließendem Schleifhub k sowie des dazu passenden Zustellmaßes bleibt jedoch gleich.

Bei tangentialer Zustellung Y sind Auslegungswinkel für das Werkzeug möglich, die in einem Intervall um den Schrägungswinkel ß liegen. Es kann also auch auf den Schrägungswinkel selbst ausgelegt werden, was bei der Zustellung in radialer Richtung X zu weniger befriedigenden Ergebnissen führt.

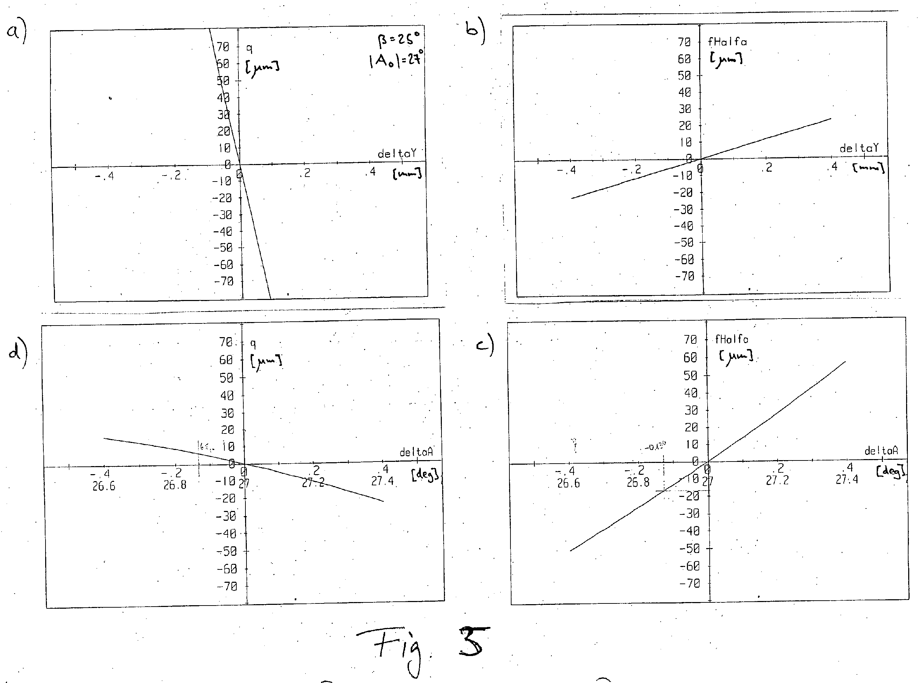

In den Figuren 5a bis 5d sind die bei tangentialer Zustellung berücksichtigten Abhängigkeiten für ein Ausführungsbeispiel einer rechtsschrägen Außenverzahnung

$$ß = 25° \text{ mit Auslegungswinkel } |A_0| = 27°$$

dargestellt, d. h. den Parametern aus Fig. 3.

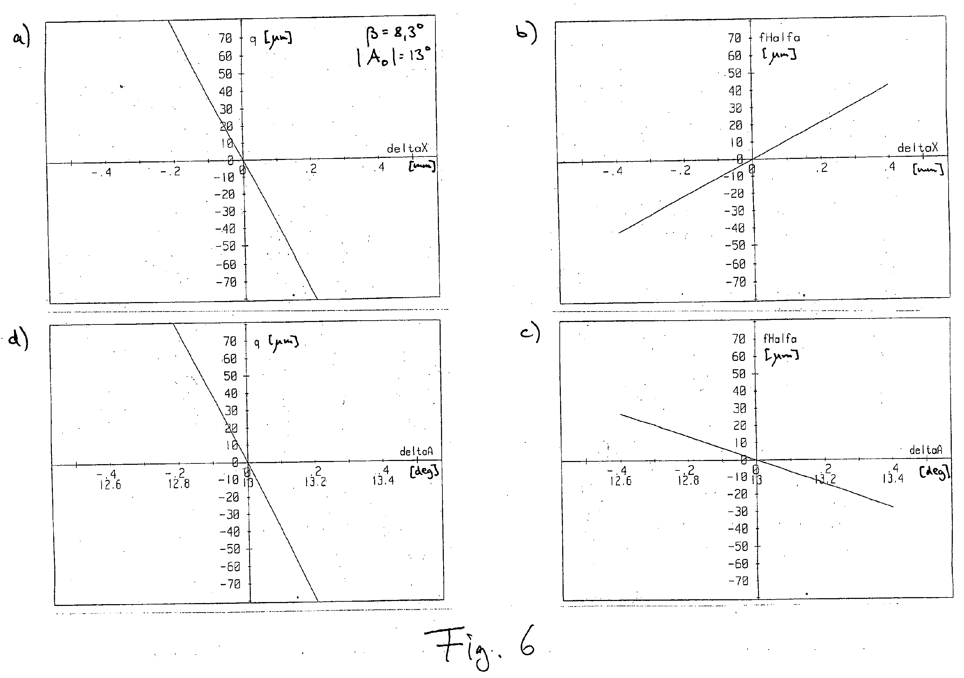

Schließlich stellen die Figuren 6a bis 6d (7a bis 7d) noch die entsprechenden Abhängigkeiten für das Ausführungsbeispiel einer Innenverzahnung mit ß = 8,3° und einem Betrag des Auslegungswinkels von 13° für radiale (tangentiale) Zustellung dar. Die obenstehend erläuterten Abstimmungen zwischen dA und dX (dY) sind jedenfalls bis ausgehend von einem Aufmaß $q_0$ von mehr als 0,5 mm pro Flanke durchführbar.

**Patentansprüche**

1. Verfahren zum Bearbeiten einer Verzahnung (2), deren Zahnflanken durch ein Aufmaß von ihrer Sollgeometrie abweichen, bei dem das Aufmaß durch eine Zustellung in mindestens zwei Zustellschritten (j) und jeweils daran anschließenden Arbeitshüben mit einem um eine Werkzeugachse (Y) rotierenden Profilwerkzeug (0) abgetragen wird, wozu das Profilwerkzeug (0) in einer von dem Schwenkwinkel (A) zwischen der zur Werkzeugachse (Y) orthogonalen Rotationsebene des Werkzeugs und der Verzahnungsachse (Z) abhängigen Einstellung relativ zu der Verzahnung (2) mit dieser in einen Bearbeitungseingriff gebracht wird, in welchem der Materialabtrag in dem sich nach dem jeweiligen Zustellschritt ergebenden Eingriffsbereich erfolgt, wobei sich der Eingriffsbereich nach dem letzten Zustellschritt (n) bei auf einen durch seine Auslegung ($A_0$) bestimmten Schwenkwinkel ($An = A_o$) eingestellten Profilwerkzeug (0) über die gesamte Flankenhöhe erstreckt und dadurch der zur Sollgeometrie führende Materialabtrag bewirkt wird,
**dadurch gekennzeichnet, daß**
in mindestens einem dem letzten Zustellschritt (n) vorangehenden Zustellschritt (k) das Profilwerkzeug (0) auf einen von seinem Auslegungswinkel ($A_0$) abweichenden Schwenkwinkel ($A_K$) eingestellt wird, der einen gegenüber der Einstellung des Auslegungswinkels ($A_0$) in Richtung der Flankenhöhe vergrößerten Eingriffsbereich ergibt.

2. Verfahren nach Anspruch 1, bei dem der mindestens eine vorangehende Zustellschritt (k) den ersten Zustellschritt des Bearbeitungsverfahrens umfaßt.

3. Verfahren nach Anspruch 1 oder 2, bei dem in mehreren Zustellschritten (j) abweichende Schwenkwinkel ($A_j$) eingestellt werden, die sich dem Auslegungswinkel monoton, insbesondere streng monoton annähern.

4. Verfahren nach einem der vorhergehenden Ansprüche, bei dem es sich bei der Verzahnung um eine echte Schrägverzahnung mit Schrägungswinkel (ß) ungleich Null oder eine Geradverzahnung ($\beta = 0$) handelt.

5. Verfahren nach einem der vorhergehenden Ansprüche, bei dem der abweichende Schwenkwinkel ($A_k$) in Abhängigkeit von der Größe des Auslegungswinkels ($A_o$) und/oder Schrägungswinkels (ß) gewählt wird.

6. Verfahren nach Anspruch 4 oder 5, bei dem der Auslegungswinkel ($A_o$) vom Betrag her größer als der Betrag des Schrägungswinkels (ß) gewählt wird.

7. Verfahren nach Anspruche 6, bei dem der Betrag des abweichenden Schwenkwinkels ($A_k$) kleiner als der Betrag des Auslegungswinkels ($A_o$) gewählt wird.

8. Verfahren nach Anspruch 4 oder 5, bei dem der Auslegungswinkel ($A_0$) vom Betrag her kleiner als der Betrag des Schrägungswinkels (ß) gewählt wird.

9. Verfahren nach Anspruch 8, bei dem der Betrag des abweichenden Schwenkwinkels ($A_k$) größer als der Betrag des Auslegungswinkels ($A_0$) gewählt wird.

10. Verfahren nach einem der vorhergehenden Ansprüche 1 bis 9, bei dem die Zustellschritte tangential (Y) erfolgen.

11. Verfahren nach einem der Ansprüche 1 bis 9, bei dem die Zustellschritte radial (X) erfolgen.

12. Verfahren nach einem der Ansprüche 1 bis 11, bei dem der abweichende Schwenkwinkel ($A_k$) rechnerisch bestimmt wird.

13. Verfahren nach einem der vorhergehenden Ansprüche, bei dem das im jeweiligen Zustellschritt (k) verwendete Zustellmaß ($dX_k;dY_k$) auf den in diesem Schritt (k) eingestellten Schwenkwinkel ($A_k$) abgestimmt wird.

14. Verfahren nach Anspruch 12 oder 13, bei dem die rechnerische Bestimmung/- Abstimmung unter Berücksichtigung einer Abhängigkeit einer, insbesondere zweier Größe(n) der Zahnflankengeometrie von einer, insbesondere zwei steuerbaren Bewegungsachsen des Werkzeugs und/oder Werkstücks zugeordneten Größe(n) erfolgt.

15. Verfahren nach Anspruch 14, bei dem als Flankengeometriegrößen das Aufmaß (q) und/oder die Profilwinkelabweichung ($f_{H\alpha}$) und als Zustellgrößen die Differenz aus abweichendem Schwenkwinkel ($A_k$) und Auslegungswinkel ($A_0$) und/oder eine Abweichung (dX; dY) des Zustellparameters (X;Y) von der maximalen möglichen Zustellung herangezogen werden.

16. Verfahren nach einem der Ansprüche 12 bis 15, bei dem bei der rechnerischen Bestimmung/Abstimmung auf das Erreichen einer unterhalb einer vorgegebenen ersten Schwelle liegenden, insbesondere verschwindenden Profilwinkelabweichung ($f_{H\alpha}$) abgestellt wird.

17. Verfahren nach einem der Ansprüche 12 bis 16, bei dem die rechnerische Bestimmung iterative Rechenschritte beinhaltet.

18. Verfahren nach Anspruch 17, bei dem als Teilschritte eines Iterationsschritt ausgeführt werden:

    - Bestimmen des Zustellmaßes, das dem aus dem vorangegangenen Iterationsschritt erhaltenen Aufmaß zugeordnet ist, aus der Abhängigkeit des Aufmaßes von dem Zustellparameter, wobei für den ersten Iterationsschritt auf das nach dem jeweiligen Arbeitshub zu erreichende Aufmaß ($q_k$) zurückgegriffen wird;
    - Bestimmen der diesem vorstehend bestimmten Zustellmaß zugeordneten Profilwinkelabweichung aus der Abhängigkeit der Profilwinkelabweichung von dem Zustellparameter;
    - Bestimmen derjenigen Abweichung vom Auslegungswinkel, bei der sich aus der Abhängigkeit der Profilwinkelabweichung von dem Schwenkwinkel eine der vorstehend bestimmten Profilwinkelabweichung betragsmäßig gleiche, aber vom Vorzeichen her unterschiedliche Profilwinkelabweichung ergibt;
    - Bestimmen einer Aufmaßkorrektur, die der vorstehend bestimmten Abweichung vom Auslegungswinkel zugeordnet ist, aus der Abhängigkeit des Aufmaßes von dem Schwenkwinkel; und Erhalten eines Aufmaßes durch Subtraktion der vorstehend bestimmten Aufmaßkorrekturen von dem nach dem jeweiligen Arbeitshub zu erreichenden Aufmaß ($q_k$), wobei das so erhaltene Aufmaß dem nächsten Iterationsschritt zugrundegelegt wird.

19. Verfahren nach Anspruch 17 oder 18 bei dem im jeweiligen Zustellschritt (k) als Abbruchkriterium für die Iteration des Unterschreiten einer vorgegebenen zweiten Schwelle durch den betragsmäßigen Abstand zwischen dem zu erreichenden Aufmaß ($q_k$) und der Summe aus im vorausgegangenen Iterationsschritt verwendetem Eingangsaufmaß und erhaltener Aufmaßkorrektur herangezogen wird.

20. Verfahren nach einem der Ansprüche 13 bis 19, bei dem die rechnerische Bestimmung/Abstimmung eine Linearisierung der Abhängigkeiten zwischen den Flankengeometriegrößen und den den Bewegungsachsen zugeordneten Größen umfaßt.

21. Verfahren nach Anspruch 20, bei dem die rechnerische Bestimmung/Abstimmung das Lösen eines aus der Linearisierung gewonnenen Gleichungssystems umfaßt

22. Verfahren nach einem der Ansprüche 1 bis 20, bei dem es sich bei dem Bearbeitungsverfahren um ein Zweiflankenverfahren handelt.

23. Verfahren nach einem der vorhergehenden Ansprüche, bei dem eine Außenverzahnung bearbeitet wird.

24. Verfahren nach einem der Ansprüche 1 bis 22, bei dem eine Innenverzahnung bearbeitet wird.

25. Verfahren nach einem der vorhergehenden Ansprüche, bei dem mehrere Zahnflanken unterschiedlicher Zahnlücken der Verzahnung (Z) mit mehreren Werkzeugen (0) oder einem entsprechend ausgelegten Multiwerkzeug gleichzeitig bearbeitet werden.

26. Verfahren nach einem der vorhergehenden Ansprüche, bei dem dem bei der Zustellung eingestellten Schwenkwinkel des Werkzeugs während seines Arbeitshubes in Richtung der Verzahnungsachse (Z) eine Modifizierung des Schwenkwinkels (A) zwischen der Werkzeugachse (Y) und der Normalebene der Verzahnungsachse (Z) überlagerbar ist und insbesondere überlagert wird.

27. Verfahren nach einem der hervorgehenden Ansprüche, bei dem die Bearbeitung im diskontinuierlichen Profilverfahren Profilschleifen und/oder Profilwälzen umfaßt.

28. Werkzeugmaschine zum Bearbeiten einer Verzahnung (2), mit einer die Richtung (Z) der Verzahnungsachse vorgebenden und zur Aufnahme der Verzahnung ausgelegten Werkstückspindel, einer die Werkzeugachse (Y) vorgebenden, zur Aufnahme eines Werkzeugs (0) ausgelegten drehbaren Werkzeugspindel, die gegenüber der Normalenebene der Verzahnungsachse (Z) um einen Schwenkwinkel (A) verschwenkbar ist, und einer die Achsbewegungen der Vorrichtung steuernden Steuereinrichtung,
**dadurch gekennzeichnet, daß**
die Steuereinrichtung zur Ausführung eines Verfahrens nach einem der vorhergehenden Ansprüche befähigt ist.

29. Computerprogrammprodukt für die Steuerung einer Werkzeugmaschine, **dadurch gekennzeichnet, daß** es auf einer Steuereinrichtung der Werkzeugmaschine ausgeführt die Werkzeugmaschine zur Durchführung eines Verfahrens nach einem der Ansprüche 1 bis 27 steuert.

**Claims**

1. A method for the machining of gear teeth (2) the tooth flanks of which deviate from their specified geometry by an allowance, wherein the allowance is removed by an infeed in at least two infeed steps (j) and respectively subsequent working passes with a profiling tool (0) that rotates about a tool axis (Y), for which purpose the profiling tool (0), in a setting relative to the gear teeth (2) dependent upon the tilt angle (A) between the plane of rotation of the tool orthogonal to the tool axis (Y) and the gear teeth axis (Z), is brought into processing engagement with said gear teeth, in which engagement the material removal takes place in the area of engagement that results after the respective infeed step, after the final infeed step (n) with the profile tool (0) set at a tilt angle ($A_n = A_0$) determined by its design ($A_0$), the area of engagement extending over the entire flank height and so the material removal leading to the specified geometry being brought about,
**characterised in that**
in at least one infeed step (k) which precedes the last infeed step (n), the profiling tool (0) is set to a tilt angle ($A_k$) that deviates from the angle ($A_0$) for which it was designed, which results in an engagement area which, in comparison to the setting of the design angle ($A_0$), is increased in the direction of the flank height.

2. The method according to Claim 1, wherein the at least one preceding infeed step (k) comprises the first infeed step of the machining method.

3. The method according to Claim 1 or 2, wherein in a number of infeed steps (j) deviating tilt angles ($A_j$) are set which come close to the design angle monotonically, in particular greatly monotonically.

4. The method according to any of the preceding claims, wherein the gear teeth are genuine helical gear teeth with a helix angle ($\beta$) different from zero or spur toothing ($\beta = 0$).

5. The method according to any of the preceding claims, wherein the deviating tilt angle ($A_k$) is chosen dependently upon the value of the design angle ($A_0$) and/or the helix angle ($\beta$).

6. The method according to Claim 4 or 5, wherein the design angle ($A_0$) is chosen to be greater in size than the size of the helix angle ($\beta$).

7. The method according to Claim 6, wherein the size of the deviating tilt angle ($A_k$) is chosen to be smaller than the size of the design angle ($A_0$).

8. The method according to Claim 4 or 5, wherein the design angle ($A_0$) is chosen to be smaller in size than the size of the helix angle ($\beta$).

9. The method according to Claim 8, wherein the size of the deviating tilt angle ($A_k$) is chosen to be greater than the size of the design angle ($A_0$).

10. The method according to any of the preceding Claims 1 to 9, wherein the infeed steps take place tangentially (Y).

11. The method according to any of Claims 1 to 9, wherein the infeed steps take place radially (X).

12. The method according to any of Claims 1 to 11, wherein the deviating tilt angle ($A_k$) is determined by calculation.

13. The method according to any of the preceding claims, wherein the infeed measure ($dX_k;dY_k$) that is used in the respective infeed step (k) is matched to the tilt angle ($A_k$) that is set in this step (k).

14. The method according to Claim 12 or 13, wherein the calculational determination/matching takes place in consideration of a dependency of one, in particular two value(s) of the tooth flank geometry upon one, in particular two value(s) assigned to controllable axes of movement of the tool and/or workpiece.

15. The method according to Claim 14, wherein one uses, as flank geometry values, the allowance (q) and/or the profile angle deviation ($f_{H\alpha}$), and as infeed values, the difference between the deviating tilt angle ($A_k$) and the design angle ($A_0$) and/or a deviation ($dX; dY$) of the infeed parameter (X;Y) from the maximum possible infeed.

16. The method according to any of Claims 12 to 15, wherein the calculational determination/matching is based on arriving at a profile angle deviation ($f_{H\alpha}$) lower than a pre-defined first threshold, in particular a vanishing profile angle deviation.

17. The method according to any of Claims 12 to 16, wherein the calculational determination includes iterative calculating steps.

18. The method according to Claim 17, wherein the following are performed as partial steps of an iteration step:

- determining the degree of infeed assigned to the allowance obtained from the preceding iteration step, from the dependency of the allowance upon the infeed parameter, for the first iteration step one falling back on the allowance ($q_k$) to be attained after the respective working pass;
- determining the profile angle deviation assigned to this degree of infeed determined above from the dependency of the profile angle deviation upon the infeed parameter;
- determining the deviation from the design angle, wherein a profile angle deviation which is equal in amount to the profile angle deviation determined above, but different from the sign, results from the dependency of the profile angle deviation upon the tilt angle;
- determining an allowance correction assigned to the deviation from the design angle determined above from the dependency of the allowance upon the tilt angle; and obtaining an allowance by subtracting the allowance corrections determined above from the allowance ($q_k$) to be attained after the respective working pass, the allowance thus obtained forming the basis of the next iteration step.

19. The method according to Claim 17 or 18, wherein in the respective infeed step (k), the failure to achieve a predetermined second threshold by the amount of gap between the allowance ($q_k$) to be achieved and the sum of the input allowance used in the preceding iteration step and the allowance correction obtained, is used as a stop criterion for the iteration.

20. The method according to any of Claims 13 to 19, wherein the calculational determination/matching comprises a linearization of the dependencies between the flank geometry values and the values assigned to the movement axes.

21. The method according to Claim 20, wherein the calculational determination/matching comprises solving a system of equations obtained from the linearization.

22. The method according to any of Claims 1 to 20, wherein the machining method is a dual-flank method.

23. The method according to any of the preceding claims, wherein machining is performed on external gear teeth.

24. The method according to any of Claims 1 to 22, wherein machining is performed on internal gear teeth.

25. The method according to any of the preceding claims, wherein a number of tooth flanks of different tooth gaps of the gear teeth (Z) are machined simultaneously with a number of tools (0) or an appropriately designed multi-tool.

26. The method according to any of the preceding claims, wherein during the working pass of the tool in the direction of the gear teeth axis (Z) a modification of the tilt angle (A) between the tool axis (Y) and the normal plane of the gear teeth axis (Z) can be superimposed, and in particular is superimposed, on the tilt angle (A) of the tool which has been set with the infeed.

27. The method according to any of the preceding claims, wherein the machining in the discontinuous profiling method comprises profile grinding and/or profile rolling.

28. A machine tool for the machining of gear teeth (2), with a workpiece spindle defining the direction (Z) of the gear teeth axis and designed to hold the gear teeth, a rotatable tool spindle defining the tool axis (Y) and designed to hold a tool (0) and which can be tilted by a tilt angle (A) relative to the normal plane of the gear teeth axis (Z), and a control device controlling the axial movements of the device, **characterised in that** the control device is able to carry out a method according to any of the preceding claims.

29. A computer programme product for the control of a machine tool, **characterised in that**, when executed on a control device of the machine tool, it controls the machine tool such as to implement a method according to any of Claims 1 to 27.

**Revendications**

1. Procédé pour l'usinage d'une denture (2) dont les flancs de dent dévient de leur géométrie de consigne du fait d'une surépaisseur, dans lequel ladite surépaisseur est éliminée au cours d'une passe comportant au moins deux étapes de passe (j) suivies chacune de périodes actives faisant appel à un outil de profilage (0) tournant sur un axe d'outil (Y), ce pour quoi l'outil de profilage (0) est mis en contact d'usinage avec la denture (2) selon une disposition vis-à-vis de cette dernière qui est conditionnée par l'angle de pivotement (A) existant entre le plan de rotation de l'outil qui est orthogonal à l'axe d'outil (Y) et l'axe de la denture (Z), et au cours de ce contact d'usinage l'enlèvement de matière se produit dans la zone de contact résultant de l'étape de passe respective, ladite zone de contact, après la dernière étape de passe (n), s'étendant sur toute la hauteur du flanc lorsque l'outil de profilage (0) est réglé selon un angle de pivotement ($A_n = A_0$) fonction de sa disposition ($A_0$), moyennant quoi il s'effectue l'enlèvement de matière permettant de produire la géométrie de consigne,

**caractérisé en ce que**

dans au moins une étape de passe (k) précédant la dernière étape de passe (n), l'outil de profilage (0) est réglé à un angle de pivotement ($A_K$) déviant de son angle de disposition ($A_0$) et permettant d'obtenir une zone de contact agrandie par rapport à un réglage d'un angle de disposition ($A_0$) dans le sens de la hauteur du flanc.

2. Procédé selon la revendication 1, dans lequel l'au moins une étape de passe (k) précédente comprend la première étape de passe du procédé d'usinage.

3. Procédé selon la revendication 1 ou 2, dans lequel des angles de pivotement ($A_j$) déviants, qui s'approchent de l'angle de disposition de manière monotone, et notamment de manière strictement monotone, sont réglés au cours de plusieurs étapes de passe (j).

4. Procédé selon l'une quelconque des revendications précédentes, dans lequel la denture est une vraie denture oblique présentant un angle d'hélice ($\beta$) différent de zéro ou une denture droite ($\beta = 0$).

5. Procédé selon l'une quelconque des revendications précédentes, dans lequel l'angle de pivotement ($A_k$) déviant est choisi en fonction de la grandeur de l'angle de disposition ($A_0$) et/ou de l'angle d'hélice ($\beta$).

6. Procédé selon la revendication 4 ou 5, dans lequel l'angle de disposition ($A_0$), en valeur absolue, est choisi pour être plus grand que la valeur absolue de l'angle d'hélice ($\beta$).

7. Procédé selon la revendication 6, dans lequel la valeur absolue de l'angle de pivotement ($A_k$) déviant est choisie pour être inférieure à la valeur absolue de l'angle de disposition (Ao).

8. Procédé selon la revendication 4 ou 5, dans lequel l'angle de disposition ($A_0$), en valeur absolue, est choisi pour être inférieur à la valeur absolue de l'angle d'hélice ($\beta$).

9. Procédé selon la revendication 8, dans lequel la valeur absolue de l'angle de pivotement ($A_k$) déviant est choisie pour être supérieure à la valeur absolue d'un angle de disposition ($A_0$).

10. Procédé selon l'une quelconque des revendications précédentes 1 à 9, dans lequel les étapes de passe s'effectuent de manière tangentielle (Y).

11. Procédé selon l'une quelconque des revendications 1 à 9, dans lequel les étapes de passe s'effectuent de manière radiale (X).

12. Procédé selon l'une quelconque des revendications 1 à 11, dans lequel l'angle de pivotement ($A_k$) déviant est déterminé par voie mathématique.

13. Procédé selon l'une quelconque des revendications précédentes, dans lequel la quantité de passe ($dX_k; dY_k$) mise en oeuvre dans l'étape de passe (k) respective est coordonnée à l'angle de pivotement ($A_k$) établi dans cette étape (k).

14. Procédé selon la revendication 12 ou 13, dans lequel la détermination mathématique/coordination s'effectue compte tenu d'une relation de dépendance à une grandeur (notamment à deux grandeurs) de la géométrie des flancs de dent d'un axe de déplacement contrôlable (notamment de deux axes de déplacement contrôlables) de l'outil et/ou de la pièce à usiner à grandeur(s) associée(s).

15. Procédé selon la revendication 14, dans lequel, comme grandeurs de géométrie de flancs, on exploite la surépaisseur (q) et/ou la déviation de l'angle de pression ($f_{H\alpha}$) et, comme grandeurs de passe, la différence entre l'angle de pivotement ($A_k$) déviant et l'angle de disposition ($A_0$) et/ou une déviation (dX; dY) du paramètre de passe (X;Y) par rapport à la passe maximale possible.

16. Procédé selon l'une quelconque des revendications 12 à 15, dans lequel, lors de la détermination mathématique/coordination, on s'oriente sur l'atteinte d'une déviation de l'angle de pression ($f_{H\alpha}$) située en-deçà d'un premier seuil prédéterminé, notamment d'une déviation de l'angle de pression ($f_{H\alpha}$) en régression.

17. Procédé selon l'une quelconque des revendications 12 à 16, dans lequel la détermination mathématique comporte des étapes de calcul itératives.

18. Procédé selon la revendication 17, dans lequel une étape d'itération comprend les étapes partielles suivantes :

- détermination de la quantité de passe, qui est associée à la surépaisseur obtenue à l'issue de l'étape d'itération précédente, à partir de la relation de dépendance entre la surépaisseur et le paramètre de passe, en ayant recours, pour la première étape d'itération, à la surépaisseur ($q_k$) destinée à être atteinte à la suite de la période active respective ;
- détermination de la déviation de l'angle de pression associée à cette quantité de passe précédemment déterminée, à partir de la relation de dépendance entre la déviation de l'angle de pression et le paramètre de passe ;
- détermination de la déviation par rapport à l'angle de disposition, pour laquelle il résulte, à partir de la relation de dépendance entre la déviation de l'angle de pression et l'angle de pivotement, une déviation de l'angle de pression égale en valeur absolue à la déviation de l'angle de pression précédemment déterminée mais différente par son signe mathématique ;
- détermination d'une correction de surépaisseur qui est associée à la déviation précédemment déterminée de l'angle de disposition, à partir de la relation de dépendance entre la surépaisseur et l'angle de pivotement ; et obtention d'une surépaisseur en soustrayant les corrections de surépaisseur précédemment déterminées de la surépaisseur ($q_k$) destinée à être atteinte après la période active respective, la surépaisseur ainsi obtenue servant de base pour l'étape d'itération suivante.

**19.** Procédé selon la revendication 17 ou 18 dans lequel, dans l'étape de passe (k) respective, on exploite comme critère de terminaison de l'itération le passage sous un deuxième seuil prédéterminé dans la quantité absolue d'écart entre la surépaisseur ($q_k$) à atteindre et la somme produite entre la surépaisseur initiale utilisée dans l'étape d'itération précédente et la correction de surépaisseur obtenue.

**20.** Procédé selon l'une quelconque des revendications 13 à 19, dans lequel la détermination mathématique/coordination comprend une linéarisation des relations de dépendance entre les grandeurs de géométrie de flancs et les grandeurs associées aux axes de déplacement.

**21.** Procédé selon la revendication 20, dans lequel la détermination mathématique/coordination comprend la résolution d'un système d'équations issu de la linéarisation.

**22.** Procédé selon l'une quelconque des revendications 1 à 20, dans lequel ledit procédé d'usinage est un procédé d'usinage sur deux flancs.

**23.** Procédé selon l'une quelconque des revendications précédentes, dans lequel il est usiné une denture extérieure.

**24.** Procédé selon l'une quelconque des revendications 1 à 22, dans lequel il est usiné une denture intérieure.

**25.** Procédé selon l'une quelconque des revendications précédentes, dans lequel plusieurs flancs de dent de différents entre-dents de la denture (Z) sont usinés avec plusieurs outils (0) ou avec un outil multiple de conception appropriée.

**26.** Procédé selon l'une quelconque des revendications précédentes, dans lequel une modification de l'angle de pivotement (A) entre l'axe d'outil (Y) et le plan de la normale de l'axe de la denture (Z) peut se superposer, et notamment se superpose, à l'angle de pivotement de l'outil établi lors du passage, pendant sa période active dans le sens de l'axe de la denture (Z).

**27.** Procédé selon l'une quelconque des revendications précédentes, dans lequel l'usinage selon le procédé de profilage discontinu comprend le meulage et/ou la génération de profils.

**28.** Machine-outil pour l'usinage d'une denture (2) comportant une broche porte-pièce prédéterminant le sens (Z) de l'axe de la denture et conçue pour recevoir la denture, une broche porte-outil rotative prédéterminant l'axe d'outil (Y) et conçue pour recevoir un outil (0), ladite broche porte-outil étant pivotante par rapport au plan de la normale de l'axe de la denture (Z) selon un angle de pivotement (A), et un dispositif de commande servant à commander les déplacements axiaux du dispositif,
**caractérisé en ce que**
le dispositif de commande est apte à mettre en oeuvre un procédé selon l'une quelconque des revendications précédentes.

**29.** Produit de programme informatique pour la commande d'une machine-outil, **caractérisé en ce qu'**il peut être mis en oeuvre sur un dispositif de commande de la machine-outil pour commander la machine-outil en vue de l'exécution d'un procédé selon l'une quelconque des revendications 1 à 27.

Fig. 1

Fig. 2

Fig. 3

Fig. 4

Fig. 3

a)

$\beta = 8,3°$
$|A_0| = 13°$

b)

d)

c)

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Als Beispiel für ein solches diskontinuierliches Profilverfahren wird darin. **THOMAS BAUSCH et al.** Innovative Zahnradfertigung. Expert Verlag, 534-537